# EUROPÄISCHE PATENTSCHRIFT

(11) **EP 0 941 799 B1**
(45) Veröffentlichungstag und Bekanntmachung des Hinweises auf die Patenterteilung: **11.06.2003**
(21) Anmeldenummer: 99102867.1
(22) Anmeldetag: 03.03.1999
(51) Int. Cl.: B23Q 1/00, B23Q 1/58

(54) **Lineare Schlauchdichtung und Saugspanneinrichtung**
Linear tubular sealing strip and vacuum clamping device
Joint d'étanchéité tubulaire linéaire et dispositif de serrage à vide

(30) Priorität: 04.03.1998 DE 19809280
(43) Veröffentlichungstag der Anmeldung: 15.09.1999
(73) Patentinhaber: HOMAG MASCHINENBAU AG, D-72296 Schopfloch (DE)
(72) Erfinder: Gauss, Achim, 75323 Wildbach (DE); Kalmbach, Kurt, 72275 Alpirsbach (DE)
(74) Vertreter: HOFFMANN - EITLE

(56) Entgegenhaltungen:
- DE-A- 4 131 695
- DE-A- 19 631 661
- US-A- 2 869 428
- US-A- 4 388 028

## Beschreibung

### Technisches Gebiet

Die Erfindung betrifft eine lineare Schlauchdichtung zum Abdichten einer ein Medium beinhaltenden Kammer gegenüber der Umgebung entlang einer Kammerabmessung. Die Schlauchdichtung umfaßt zwei Schlauchteile, die in im wesentlichen einer Linienberührung dichtend aneinander anliegen. Zwischen den Schlauchteilen ist ein Entnahmekörper zum Entnehmen des in der Kammer befindlichen Mediums in die Kammer ein- und ausbringbar sowie bei zwischen den zwei aneinander anliegenden Schlauchteilen eingeführtem Entnahmekörper vorteilhafterweise auch verschiebbar.

Außerdem betrifft die Erfindung eine Saugspanneinrichtung in insbesondere Bearbeitungszentren zum Bearbeiten von meist plattenförmigen Werkstücken aus Holz-, Kunststoff-, Schicht- oder Verbundwerkstoffen. Derartige Saugspanneinrichtungen haben zumindest eine Tragschiene, auf der wenigstens ein Saugkopf bewegbar ist und in der eine oder mehrere langgestreckte Kammern vorhanden sind, die mit einer Vakuumquelle verbunden sind. Diese Kammern sind durch eine lineare Schlauchdichtung der eingangs genannten Art nach außen hin abgedichtet. Zwischen den Schlauchteilen ist ein ein- und ausführbarer und/oder längsverschiebbarer Entnahmekörper zum Entnehmen des in der Kammer befindlichen Mediums in die Kammer einbringbar, der mit einem oder mehreren der Saugköpfe verbunden ist.

### Stand der Technik

Lineare Dichtungen werden insbesondere dann benötigt, wenn ein Medium, wie beispielsweise eine Flüssigkeit, aber insbesondere Druckluft oder Vakuum, aus einer eine gewisse Längenausdehnung aufweisenden Kammer an einer beliebigen Stelle entnehmbar sein soll. Derartige Dichtungen finden insbesondere Verwendung in Aufspanneinrichtungen für Bearbeitungsmaschinen, die auch als Bearbeitungszentren bezeichnet werden. Für eine Aufspannung der jeweils zu bearbeitenden Werkstücke am Bearbeitungsplatz eines derartigen Bearbeitungszentrums sind Tragschienen vorgesehen, auf denen Schlitteneinheiten in Form von verschiebbaren Vakuum-Saugköpfen angeordnet sind. Solche auf Tragschienen angeordnete Vakuum-Saugköpfe bilden eine Saugspanneinrichtung, auf der die Werkstücke während ihrer Bearbeitung mittels einer Vakuumansaugung fest aufgespannt werden. Dabei sind zusätzlich zu einer Verschiebbarkeit der Vakuumsaugköpfe (nachfolgend einfacherweise auch als "Saugköpfe" bezeichnet), in der Regel auch die Tragschienen selbst in Querrichtung zu ihren Längsachsen verschiebbar.

Die Versorgung der Saugköpfe auf den Tragschienen erfolgt oft über Schleppschläuche und Schleppkabel. Jeder Saugkopf ist individuell an solche Schleppschläuche und -kabel angeschlossen, um ihn beispielsweise mit Vakuum zu versorgen, damit der Saugkopf ein aufgelegtes Werkstück durch Vakuumansaugung fixieren kann. Wenn der Saugkopf auf der Tragschiene in eine neue Position verschoben wird, wandern die Schleppschläuche und -kabel entsprechend mit.

Derartige Einrichtungen weisen den Nachteil auf, daß sich die Versorgungsleitungen für die einzelnen Saugköpfe untereinander behindern können. Damit wird die Saugerpositionierung erschwert, da eventuelle gegenseitige Behinderungen der Saugköpfe mit ihren Versorgungsleitungen berücksichtigt werden müssen. Da durch die Versorgungsschläuche das herunterfallen von Reststücken und Spänen behindert wird, kann es außerdem zu Beschädigungen einzelner Komponenten der Aufspannvorrichtung kommen. Überdies wird hierdurch die Verschmutzung der Aufspanneinrichtung begünstigt.

Aus der DE 44 04 413 C1 ist zwar eine Vakuumspannvorrichtung mit verschiebbaren Saugköpfen bekannt, die ohne Versorgungsleitungen funktioniert, jedoch ist eine im wesentlichen stufenlose, positionsunabhängige Entnahmemöglichkeit des Vakuums durch die verschiebbaren Saugköpfe hier mittels einer Vielzahl von durch Ventile verschließbare Bohrungen in einer Tragschiene geschaffen. Diese Ventile, die die einzelnen Bohrungen verschließen, wenn kein Saugkopf darüber positioniert ist, sind relativ aufwendig und damit teuer.

In der DE 40 10 840 A1 ist eine vom grundsätzlichen Aufbau her der vorgenannten Vakuumspannvorrichtung sehr ähnliche Befestigungsplatte gezeigt. Auch hier sind Anschlußstellen zur Entnahme beispielsweise eines Vakuums durch Stopfen oder Ventile verschließbar.

Eine technisch sehr aufwendige und teuere Kolben-Zylinder-Anordnung zum Zuführen eines Arbeitsmediums zu einer bewegten Vorrichtung ist aus der DE 38 18 647 A1 bekannt.

In der EP 0 687 521 A1 ist eine Tragschiene mit zugehörigen Saugspannern offenbart, bei der die Verbindung der Saugspanner mit der Vakuumquelle über eine veschließbare Magnetdichtung erfolgt. Die Magnetdichtung umfaßt einen verformbaren Streifen aus magnetischem Material, der sich auf gleichmäßig verteilte Löcher einer magnetischen Seitenwand der Tragschiene legt. Durch eine Auslenkeinrichtung wird beim Verschieben der Saugspannner der magnetische Streifen von der Seitenwand abgehoben und damit über die Löcher die Verbindung zu einem dahinter liegenden Versorgungskanal freigegeben. Diese Anordnung ist zum einen dahingehend nachteilig, daß die Anzahl der Saugspanner auf einer Tragschiene unveränderbar ist. Zum anderen ist ein Abnehmen der Saugspanner nicht möglich.
Aus der DE 196 31 661 A1, die die Basis für den Oberbegriff des Anspruchs 1 bildet, ist eine Tragschiene mit darin befindlicher Längskammer gezeigt, in der die Kammer durch einander gegenüberliegende runde Schlauchdichtungen nach außen hin abgedichtet wird. Ein sogenanntes Schiffchen ist zwischen die zwei aneinanderliegenden Schlauchteile einbringbar und verschiebbar. Über das Schiffchen ist das Vakuum in der Kammer auf den zugehörigen Saugkopf überführbar. Durch die Bewegung des Entnahmekörpers (Schiffchen) zur Fluidübertragung entsteht Reibung. Diese Reibung führt zu den folgenden Nachteilen. So ist bei sehr großer Reibung, beispielsweise bei einem hohen Reibungskoeffizienten aufweisenden Schlauchteilmaterial oder einer großen Berührfläche zwischen dem Entnahmekörper und den Schlauchteilen, ein starker Antrieb zum Verschieben des Entnahmekörpers notwendig. Außerdem tritt das Problem auf, daß sich die Schlauchteile verdrehen.

Eingehende Untersuchungen haben ergeben, daß das Einkleben der Schlauchteile in der Tragschiene keine praxisgerechte Lösung darstellt. Zum einen ist es schwierig und teuer, die Schlauchteile einzukleben. Die Klebeverbindung selbst ist nicht standfest. Außerdem ist es nicht einfach, ein durch Verschleiß abgenutztes bzw. ein beschädigtes Schlauchteil auszutauschen. Demzufolge muß die gesamte Tragschiene ausgetauscht werden, was wiederum teuer und nicht marktgerecht ist.

### Darstellung der Erfindung

Das der Erfindung zugrundeliegende technische Problem besteht darin, eine einfache und kostengünstige Einrichtung zum positionsunabhängigen Entnehmen eines Mediums, insbesondere Druckluft oder Vakuum, aus einer Kammer bereitzustellen.

Dieses technische Problem wird durch eine Schlauchdichtung mit den Merkmalen des Anspruchs 1 gelöst. Eine derartige Schlauchdichtung zur Abdichtung einer langgestreckten Kammer nach außen hin zeichnet sich durch zwei Schlauchteile aus, die in im wesentlichen einer Linienberührung dichtend aneinander anliegen. Zwischen diesen aneinander anliegenden Schlauchteilen ist ein Entnahmekörper in die Kammer ein- und ausführbar bzw. und/oder verschiebbar. Beide Schlauchteile sind jeweils mit einem Schlauchteilhalteabschnitt zumindest teilweise in einer Aufnahmenut eines Haltekörpers formschlüssig einsetzbar.

Durch diese erfindungsgemäße formschlüssige Schlauchhalteanordnung wird das Problem des Verdrehens der Schlauchteile unterbunden. Außerdem kann unter Umständen die Klebung, die sich in der Praxis als unzureichend und untauglich erwiesen hat, vorteilhafterweise durch den Formschluß mit der Haltenut vollständig entfallen. Durch das einfache Einsetzen und den Formschluß ist darüber hinaus ein äußerst einfacher Austausch eines durch Verschleiß beschädigten Schlauchteils möglich. Durch die neuartige formschlüssige Verbindung zwischen den einzelnen Schlauchteilen und den zugehörigen Haltenuten wird also vorteilhafterweise ein Verdrehen der Schlauchteile verhindert, gleichzeitig aber auch ein einfacher Austausch sichergestellt.

Bei der aus der DE 196 31 661A1 bekannten Schlauchdichtung mußten aufgrund der vorgegebenen runden Außenkontur die Dichtungsteile verklebt werden. Ein Formschluß war hier nicht vorgesehen.

Grundsätzlich ist erfindungsgemäß jede Außenkontur geeignet, die ein Verdrehen des Schlauchteiles im zugehörigen Haltekörper um die Längsachse des Schlauchteils verhindert. Dazu ist es vorteilhaft, wenn ein oder mehrere vom Außenumfang abstehende Stegelemente vorhanden sind, die in Ausnehmungen im Haltekörper einsetzbar sind. Damit ist wiederum ein Formschluß, der ein Verdrehen des Schlauchteils im zugehörigen Haltekörper verhindert, gebildet.

Herstellungstechnisch ist es von Vorteil, wenn jedes Schlauchteil einen einstückig angeformten Steg als Schlauchteilhalteabschnitt aufweist, dessen Stegbreite der Aufnahmenutbreite angepaßt ist. Damit ist es zum einen möglich, den erfindungsgemäßen Formschluß zwischen Schlauchteilhalteabschnitt und Aufnahmenut herzustellen, zum anderen ist das Profil aber auch sehr kostengünstig zu fertigen. Außerdem ist das korrekte Positionieren eines derartigen Schlauchteils in der Haltenut sehr einfach.

Je nach der Art des in der Kammer befindlichen Fluids, wie beispielsweise ein Vakuum oder Druckluft, ist es vorteilhaft, jedes Schlauchteil innen mit Druckluft zu beaufschlagen. Damit ist die Dichtwirkung der zwei in im wesentlichen in einer Linienberührung dichtend aneinander anliegenden Schlauchteile einstellbar. Auch die Reibung zwischen den dichtenden Schlauchteilen und dem Entnahmekörper ist entsprechen variabel. Bei höherer Druckbeaufschlagung eines jeden Schlauchteils ist natürlich auch die Reibung zwischen den aneinander gleitenden Teilen entsprechend erhöht oder erniedrigt. So kann es dann vorteilhaft sein, zum Verschieben des Entnahmekörpers den Druck in den Schlauchteilen zu reduzieren.

Als einfachstes und äußerst kostengünstiges Schlauchdichtungsmaterial ist jedwede Gummiart oder allgemein elastisches Material geeignet. Insbesondere ist PUR (Polyurethan) als Schlauchdichtungsmaterial vorteilhaft, da es eine geringe Reibung verursacht und druckfest ist. Als Schlauchmaterial ist aber auch vernetztes PE (Polyethylen) geeignet.

Sehr vorteilhaft ist es, wenn jedes Schlauchteil in der Länge vorgespannt in die Aufnahmenut lösbar eingesetzt ist. Damit wird ein trotz des Formschlußes zwischen den Schlauchteilhalteabschnitten und der Aufnahmenut möglicherweise auftretendes Verdrehen weitgehend verhindert.

Um die Reibung zwischen den einzelnen Schlauchteilen und dem Entnahmekörper weiter zu reduzieren, ist es vorteilhaft, die Schlauchteile an sich bereits aus einem einen niedrigen Reibungskoeffizienten aufweisenden Material herzustellen bzw. mit einem solchen Material zu beschichten. Insbesondere eignet sich hierfür Teflon.

Aus fertigungstechnischen Gründen kann es sehr vorteilhaft sein, die Schlauchteile und die Kammer als einstückiges Schlauchprofil auszubilden. Das erspart in dem Haltekörper bzw. insbesondere der Tragschiene einer Saugspanneinrichtung einen Fertigungsvorgang. So muß nur eine große Aufnahmenut für das gesamte Schlauchprofil geschaffen werden. Außerdem sind die Fertigungstoleranzen für eine derartige Aufnahmenut relativ groß, so daß eine kostengünstige Bearbeitung möglich ist. Überdies kann die Tragschiene dann auch aus einem Stranggußprofil, beispielsweise Aluminiumstranggußprofil, hergestellt werden.

Beispielsweise ist ein Formschluß durch eine kantige Außenkontur der Schlauchteile im Schlauchteilhalteabschnitt möglich. Auch ein entsprechendes Schlauchprofil, bei dem die Schlauchteile und die Kammer einstückig ausgebildet sind, kann vorteilhafterweise eine derartige kantige Außenkontur besitzen. Unter kantiger Außenkontur ist hier jedwede prismenartige Gestaltung oder auch stegartige Ausgestaltung mit Rippen, Wülste und dergleichen, die nach außen vorstehen, geeignet. So lange die Profilgebung eine Verdrehung in der Aufnahmenut durch die Formgebung verhindert, ist jedwedes Profil hierfür geeignet.

Sehr vorteilhaft ist es, wenn jedes Schlauchteil im Querschnitt gesehen, im Bereich der Dichtfläche, das heißt an demjenigen Schlauchteilabschnitt, der mit dem gegenüberliegenden Schlauchteilabschnitt in Anlage gelangt, eine dünnere Wandstärke besitzt als im Bereich des Schlauchteilhalteabschnitts, mit dem das jeweilige Schlauchteil im Haltekörper gehalten wird. Damit sind insbesondere die Seitenflächen der Schlauchteilhalteabschnitte steifer als der die Dichtfläche darstellende Bereich, so daß beim Einfedern der Schlauchdichtung möglichst wenig Reibung mit der Seitenfläche entsteht. Die Wandstärke an diesen verdünnten Abschnitten, die sozusagen ein "Gelenk" bilden, beträgt je nach Material und Gesamtabmessung eines Schlauchteils zwischen 1/10 mm und 5/10 mm. Eine besonders gute Einfederungswirkung wurde mit einer Wandstärke von 3/10 mm im Bereich der "Gelenkstelle (bzw. Gelenklinie)" erzielt.

Durch die Ausbildung jedes Schlauchteiles mit einer vorstehenden Lippe, die in im wesentlichen eine Linienberührung aneinander anliegen und die gegenüber den jeweiligen Seitenwänden nachgiebiger ausgestaltet sind, ermöglicht wiederum eine möglichst steife Ausbildung der Schlauchdichtung, jedoch eine elastische Nachgiebigkeit im Bereich des Dichtungsbereiches und demjenigen Abschnitt, der mit dem Entnahmekörper in Berührung kommt. Damit ist eine axiale Bewegung des Entnahmekörpers zwischen den Schlauchteilen mit minimalem Reibungsverlust an den Seitenwänden möglich. Die Nachgiebigkeit der vorstehenden Lippen an den Schlauchteilen ist wiederum durch eine Verdünnung der Wandstärke des Schlauchteiles an, im Querschnitt gesehen, jeweils den Seiten der Lippen bewirkt.

Indem jedes Schlauchteil im Haltekörper durch einen druckbeaufschlagten Stützschlauch abgestützt wird, wird das gesamte Schlauchteil im Haltekörper federnd gelagert und die Dichtfunktionalität kann über den im Stützschlauch vorteilhafterweise veränderbaren Druck in Anpassung an die Umgebungsbedingungen verändert werden.

Vorteilhafterweise ist der Stützschlauch einstückig mit dem zugehörigen Schlauchteil ausgebildet. Damit ist das Einsetzen der gesamten Schlauchdichtung in einfachster Weise möglich.

Schlauchdichtungen der genannten Art sind insbesondere bei Saugspanneinrichtungen einsetzbar, die mindestens eine Tragschiene als Haltekörper aufweist, auf der zumindest ein Saugkopf bewegbar ist und in der zumindest eine langgestreckte Kammer vorhanden ist. Diese Kammer ist dann durch die lineare Schlauchdichtung gemäß der Erfindung nach außen hin abgedichtet. Ein ein- und ausrückbarer und/oder längsverschiebbarer Entnahmekörper zum Entnehmen des in der Kammer befindlichen Mediums ist in die Kammer einbringbar und mit einem oder mehreren der Saugköpfe verbunden.

Eine sehr platzsparende Anordnung ergibt sich, wenn die Kammer seitlich der Tragschiene angeordnet ist und seitlich durch die Schlauchdichtung verschlossen ist.

Dabei ist es äußerst nützlich, wenn der Saugkopf auf der Tragschiene verschieblich angeordnet ist und der Entnahmekörper quer zur Längserstreckungsrichtung der Tragschiene ein- und ausrückbar ist.

### Kurze Beschreibung der Zeichnungen

Im folgenden sind zur weiteren Erläuterung und zum besseren Verständnis mehrere Ausführungsbeispiele der Erfindung unter Bezugnahme auf die beigefügten Zeichnungen näher beschrieben und erläutert. Es zeigt:
- Fig. 1: eine Querschnittsansicht durch eine erste Ausführungsform der erfindungsgemäßen Schlauchdichtung mit zwei aneinander anliegenden Schlauchteilen,
- Fig. 2: ein Querschnitt durch eine Tragschiene einer Saugspanneinrichtung, in der beispielhaft eine lineare Schlauchdichtung, wie sie in der Fig. 1 gezeigt ist, in eine Haltenut eingesetzt ist,
- Fig. 3: eine zweite Ausführungsform einer erfindungsgemäßen linearen Schlauchdichtung, bei der die aneinander anliegenden Schlauchteile und die durch diese Schlauchteile abzudichtende Kammer in einem Schlauchprofil einstückig ausgebildet sind,
- Fig. 4: eine Tragschiene einer Saugspanneinrichtung mit einem Schlauchprofil, wie es in der Fig. 3 gezeigt ist,
- Fig. 5: eine Seitenansicht auf eine lineare Schlauchdichtung, wie sie beispielsweise in der Fig. 1 gezeigt ist, mit darin eingeführtem Entnahmekörper zur Entnahme des Mediums der durch die Schlauchdichtung abgedichteten Kammer,
- Fig. 6: eine Querschnittsansicht durch eine Tragschiene einer Saugspanneinrichtung mit darauf verschiebbar angeordnetem Saugkopf und ein- und ausrückbarem Entnahmekörper
- Fig. 7: eine Querschnittsansicht gemäß der Fig. 6, bei der der Entnahmekörper zwischen die Schlauchdichtungsteile eingeführt ist,
- Fig. 8: eine Querschnittsansicht durch eine weitere Ausführungsform der erfindungsgemäßen Schlauchdichtung mit zwei aneinander anliegenden Schlauchteilen, die der in der Fig. 1 gezeigten Ausführungsform sehr ähnlich ist, bei der jedoch die Wandstärken der Schlauchteile an verschiedenen Abschnitten unterschiedlich dick sind,
- Fig. 9: eine schematische Querschnittsansicht durch eine weitere Ausführungsform der erfindungsgemäßen Schlauchdichtung, bei der die Schlauchteile vorstehende Lippen aufweisen,
- Fig. 10: eine schematische Querschnittsansicht durch eine andere Ausführungsform der erfindungsgemäßen Schlauchdichtung, bei der die Schlauchteile jeweils mit einem Stützschlauch ausgebildet sind, und
- Fig. 11: eine Querschnittsansicht durch eine weitere Ausführungsform der erfindungsgemäßen Schlauchdichtung, die der Ausbildung gemäß der Fig. 10 sehr ähnlich ist, bei der jedoch die jeweiligen Stützschläuche separat ausgebildet sind.

### Beschreibung von Ausführungsbeispielen der Erfindung

### 1. Ausführungsform

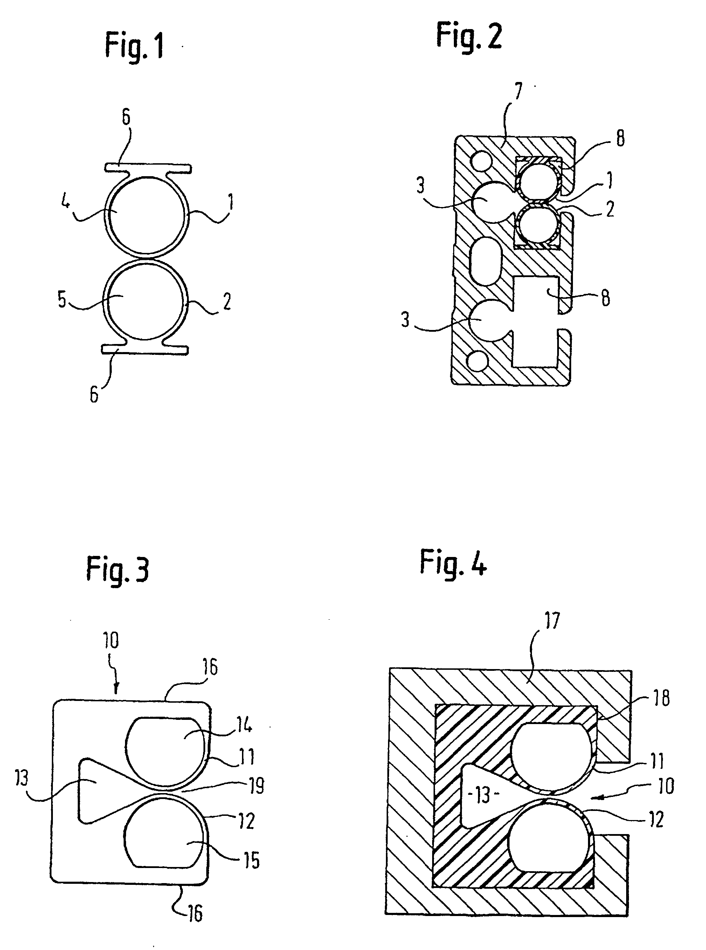

Eine erste Ausführungsform einer erfindungsgemäßen linearen Schlauchdichtung ist aus den Fig. 1, 2 und 5 ersichtlich.

Aus der schematischen Querschnittsansicht gemäß der Fig. 1 ist die grundsätzliche Ausgestaltung eines jeden Schlauchteils 1, 2 einer Schlauchdichtungsanordnung erkennbar. Die Schlauchdichtung besteht grundsätzlich aus zwei zueinander identischen Schlauchteilen 1, 2, die eine im wesentlichen runde Querschnittsform haben. Die Schlauchteile 1, 2 sind in ihrem Inneren 4, 5 hohl und je nach abzudichtendem Medium mit Druckluft beaufschlagbar. An der Außenkontur erstreckt sich tangential zu der im wesentlichen Kreisform ein Steg 6. Der Steg 6 ist einstückig am jeweiligen Schlauchteil 1, 2 angeformt und erstreckt sich über dessen gesamte Längsausdehnung.

An den den Stegen 6 gegenüberliegenden Mantellinien der Schlauchteile 1, 2 liegen die Schlauchteile 1, 2 dichtend aneinander an.

In der Fig. 2 ist eine Tragschiene 7 einer Saugspanneinrichtung im Querschnitt dargestellt, in der die erfindungsgemäße Schlauchdichtung, umfassend die Schlauchteile 1, 2, eingebaut ist. Die Tragschiene 7 weist bei dieser Ausführungsform zwei übereinander liegende, sich in Längsrichtung der Schiene erstreckende Kammern 3 auf, die jeweils mit einer Aufnahmenut 8 verbunden sind. In die rechteckige Aufnahmenut 8 sind die zwei Schlauchteile 1, 2 mit ihren Stegen 6 voneinander abgewandt eingebaut und um ca. 10 % vorgedehnt eingelegt. Dabei liegen die Schlauchteile 1, 2 an den runden Seiten längs ihrer Mantellinien über einen Längenbereich dichtend aneinander an. Damit wird die Kammer 3 gegenüber der Umgebung abgedichtet. In der Kammer 3 ist nun ein Gas oder je nach Einsatzgebiet auch ein Vakuum vorhanden.

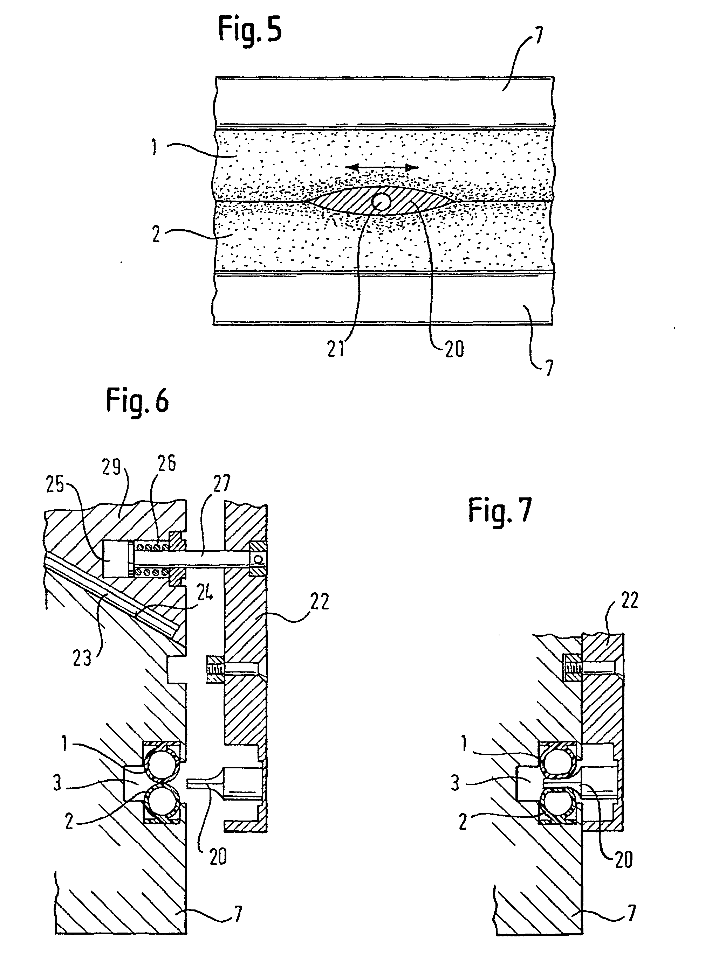

Um dieses Vakuum in der Kammer 3 zu beispielsweise Saugköpfen, wie es in der Fig. 6 und 7 angedeutet ist, hinzuleiten, ist ein Entnahmekörper 20 zwischen die zwei Schlauchteile 1, 2 einsteckbar und zudem optional eingesteckt verfahrbar.

Dazu weist die Tragschiene 7 gemäß den Fig. 6 und 7 seitlich die Kammer 3 mit der eingesetzte Schlauchdichtung 1, 2 auf. Auf der Tragschiene 7 ist ein verfahrbarer Saugkopf 30 verschiebbar auf einer Auflagefläche 24 zur Tragschiene 7 und ein Gleitlager 23 verschiebbar. Ein Haltebolzen 27 ist über eine Feder 26 nach innen gedrückt. Durch eine mit Druckluft beaufschlagte Kammer 25 kann gegen die Federkraft der Feder 26 der Haltebolzen 27 nach außen ausgerückt werden. An dem Haltebolzen 27 ist ein Versorgungsbügel 22 angebracht, der wiederum den Entnahmekörper 20 (auch Schiffchen genannt) seitlich trägt.

Durch Evakuierung der Kammer 25 und durch die Federkraft der Feder 26 wird der Versorgungsbügel 22 zur Tragschiene hin gedrückt. Dabei gelangt der Entnahmekörper 20 zwischen die zwei dicht aneinanderliegenden Schlauchteile 1, 2 und dringt in die Kammer 3 ein. Durch die Entnahmeöffnung 21 im Entnahmekörper 20 kann nun das Vakuum auf die Saugköpfe 30 übertragen werden. Dabei ist auch ein seitliches Verfahren des Versorgungsbügels 20, das heißt, der Saugköpfe 30, bei eingerücktem Versorgungsbügel 22 möglich.

Das Ein- und Ausrücken des Versorgungsbügels 22 ist vorgesehen, damit die Saugköpfe 30 jederzeit nach oben von der Tragschiene 7 weg abgehoben und beispielsweise in ein Saugspeichersystem abgelegt werden können.

### 2. Ausführungsform

Eine zweite Ausführungsform einer erfindungsgemäßen Schlauchdichtung ist in den Fig. 3 und 4 gezeigt. Die hier gezeigte Ausführungsform umfaßt zwei Schlauchteile 11, 12, die auf einander zugewandten Seiten eine abgerundete konvexe Oberfläche aufweisen. In im wesentlichen einer Linienberührung liegen diese zwei konvexen Oberflächen dichtend aneinander an. Diese Oberflächen erweitern sich zu einer Kammer 13 hin, die durch die genannten konvexen Teile abgedichtet wird. Die Kammer 13 erstreckt sich über das gesamte Schlauchprofil, das eine Längsausdehnung aufweist. Die Schlauchdichtung 10 ist zudem auf den einander abgewandten Seiten der Schlauchteile 11, 12 kantig ausgeführt, hier rechteckförmig, so daß mit einer entsprechenden Aufnahmenut 18 in einem Haltekörper 17 ein Formschluß, der ein Verdrehen der des Schlauchprofils 10 in der Aufnahmenut 18 verhindert, erzielbar ist. Die Kammer 13 erfüllt den gleichen Zweck wie die Kammer 3 bei dem ersten Ausführungsbeispiel.

Wie es aus den Fig. 3 und 4 ersichtlich ist, sind die Schlauchteile 11, 12 und die Kammer 13 in einem einteiligen Schlauchprofil ausgebildet. Damit ist es nicht mehr notwendig, den Kanal oder die Kammer 3 und die Aufnahmenut 8, - wie bei dem ersten Ausführungsbeispiel, separat zu fertigen, sondern es genügt, lediglich eine Aufnahmenut 18 entsprechender Größe im Tragprofil 17 auszubilden. Die weitere Anordnung kann dann entsprechend den Fig. 6 und 7 erfolgen.

### 3. Ausführungsform

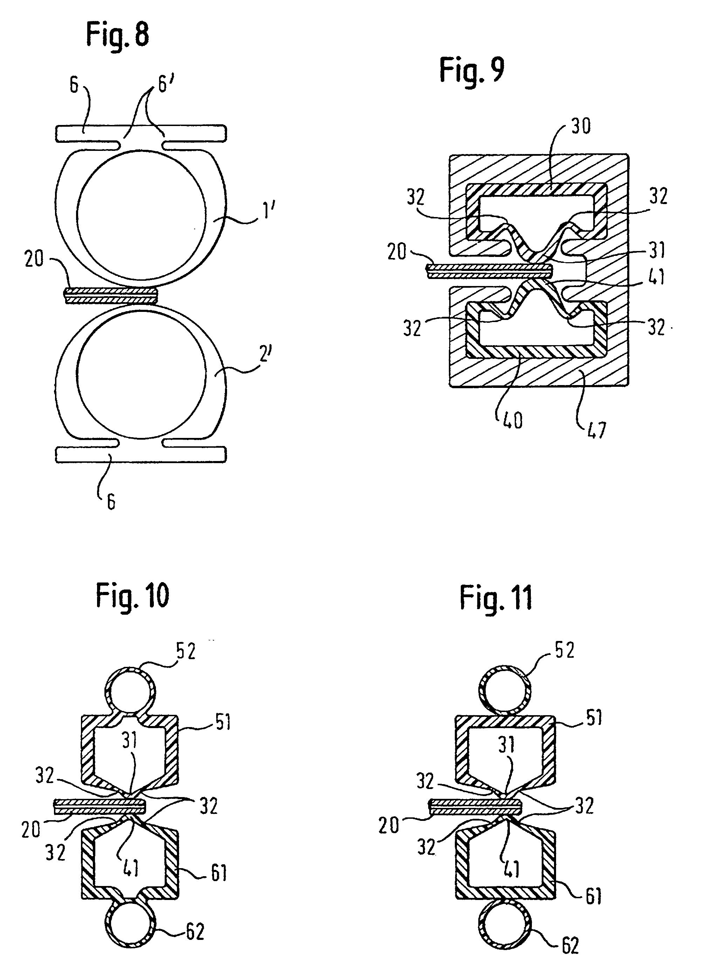

Die in der Fig. 8 dargestellte dritte Ausführungsform der erfindungsgemäßen Schlauchdichtung ähnelt der in der Fig. 1 gezeigten Ausführungsform. Hier sind jedoch die Wandstärken der Schlauchteile 1' und 2' jeweils im Bereich der aneinanderliegenden Abschnitte dünner ausgebildet als in dem Bereich, mit dem sie im Haltekörper befestigt sind. Durch die gekrümmte Außenkontur der Schlauchteile 1' und 2' ist die Berührungsfläche zu dem Entnahmekörper 20 minimiert und damit die Reibung auf ein Mindestmaß reduziert. Durch die dickere Ausbildung der Seitenbereiche der Schlauchteile 1' und 2' sind diese steifer ausgebildet als der Rest der Schlauchteile, so daß beim Einfedern der Schlauchteile 1', 2' keine Reibung mit der Seitenfläche erfolgt. Die gesamte Einfederung erfolgt über die Stellen 6', die den Übergangsbereich zu dem Steg 6 bilden.

### 4. Ausführungsform

Eine vierte Ausführungsform einer erfindungsgemäßen Schlauchdichtung ist in der Fig. 9 gezeigt. Die hierin dargestellten Schlauchteile 30, 40 weisen jeweils vorstehende Lippen 31, 41 auf, die die Dichtfläche bilden. Durch die vorstehende Ausbildung der Lippen 31, 41 ist die Berühr- oder Dichtfläche minimiert und damit die Reibung mit dem Entnahmekörper 20 auf ein Mindestmaß reduziert. Durch die im Querschnitt gesehen rechteckige Außenkontur ist ein Verdrehen der Schlauchdichtung im Haltekörper 47 ausgeschlossen. Damit die Lippen 31, 41 relativ elastisch sind, die Reibung jedoch auf ein Mindestmaß reduziert bleibt, sind diese durch zwei verdünnte Bereiche 32 flexibel gelagert.

Beim Eindringen des Entnahmekörpers 20 federn die Lippen 31, 41 an den verdünnten Stellen 32 ein.

### 5. Ausführungsform

Bei der in der Fig. 10 dargestellten fünften Ausführungsform einer erfindungsgemäßen Schlauchdichtung sind die Schlauchteile 51, 61 an ihren, den jeweiligen Haltekörpern zugewandten Seiten mit einem Stützschlauch 52, 62 ausgebildet. Der Stützschlauch schafft eine federnde Lagerung der Schlauchteile 51, 61. Vorteilhafterweise sind die Stützschläuhe 52, 62 mit variablem Druck beaufschlagbar, so daß die "Federung" der Schlauchteile 51, 61 im zugehörigen Haltekörper einstellbar ist. Ansonsten ist die Ausbildung der Schlauchteile 51, 61 im Bereich der Dichtflächen der Ausführungsform gemäß der Fig. 9 sehr ähnlich. Wiederum sind verdünnte Stellen 32 und Lippen 31, 41 vorhanden.

### 6. Ausführungsform

Die sechste Ausführungsform gemäß der Fig. 11 unterscheidet sich von der in der Fig. 10 dargestellten Ausführungsform nur darin, daß die Stützschläuche 52, 62 als separate Teile hinter die Schlauchteile 51, 61 angelegt sind, und nicht einstückig, wie bei der Ausführungsform gemäß der Fig. 10.

## Patentansprüche

1. Lineare Schlauchdichtung zur Abdichtung einer ein Medium beinhaltenden Kammer (3) über deren Längserstreckung gegenüber der Umgebung, mit zwei Schlauchteilen (1, 2; 11, 12), die
- in im wesentlichen einer Linienberührung dichtend aneinander anliegen,
- zwischen denen ein Entnahmekörper (20) zum Entnehmen des Mediums in die Kammer (3) ein- und ausführbar ist, **dadurch gekennzeichnet daß**
- die jeweils mit einem Schlauchteilhalteabschnitt (6; 16) zumindest teilweise in eine Aufnahmenut (8; 18) eines Haltekörpers (7, 17) formschlüssig derart einsetzbar sind, daß ein Verdrehen des Schlauchteiles im zugehörigen Haltekörper um die Längsachse des Schlauchteils verhindert wird.

2. Schlauchdichtung nach Anspruch 1, **dadurch gekennzeichnet, dass** jedes Schlauchteil einen oder mehrere vom Außenumfang abstehende Stegelemente aufweist, die in Ausnehmungen im Haltekörper einsetzbar sind.

3. Schlauchdichtung nach Anspruch 1, **dadurch gekennzeichnet, daß** jedes Schlauchteil (1, 2; 11, 12) einen einstückig angeformten Steg (6) als Schlauchteilhalteabschnitt aufweist, dessen Stegbreite der Aufnahmenutbreite angepaßt ist.

4. Schlauchdichtung nach Anspruch 1, 2 oder 3, **dadurch gekennzeichnet, daß** jedes Schlauchteil (1, 2; 11, 12) innen mit Druckluft beaufschlagbar ist.

5. Schlauchdichtung nach einem der vorhergehenden Ansprüche, **dadurch gekennzeichnet, daß** jedes Schlauchteil (1, 2 ; 11, 12) aus einem elastischen Material, insbesondere PUR, besteht.

6. Schlauchdichtung nach Anspruch 1, **dadurch gekennzeichnet, daß** jedes Schlauchteil (1, 2; 11, 12) in der Länge vorgespannt in die Aufnahmenut (8; 18) lösbar eingesetzt ist.

7. Schlauchdichtung nach Anspruch 1, **dadurch gekennzeichnet, daß** jedes Schlauchteil (1, 2; 11, 12) auf dem Abschnittsbereich, der mit dem Entnahmekörper (20) in Berührung gelangt, mit einem reibungsreduzierendem Material beschichtet ist.

8. Schlauchdichtung nach Anspruch 7, **dadurch gekennzeichnet, daß** das reibungsreduzierende Material Teflon ist.

9. Schlauchdichtung nach Anspruch 1, **dadurch gekennzeichnet, daß** die Schlauchteile (11, 12) und die Kammer (13) als einstückiges Schlauchprofil (10) ausgebildet sind.

10. Schlauchdichtung nach Anspruch 1, **dadurch gekennzeichnet, daß** die Schlauchteile (1, 2) eine kantige Außenkontur aufweisen.

11. Schlauchdichtung nach Anspruch 9, **dadurch gekennzeichnet, daß** das Schlauchprofil (10) eine kantige Außenkontur aufweist.

12. Schlauchdichtung nach Anspruch 1, **dadurch gekennzeichnet, daß** jedes Schlauchteil (1', 2') im Bereich der Dichtfläche eine dünnere Wandstärke besitzt als im Bereich des Schlauchteilhalteabschnitts.

13. Schlauchdichtung nach Anspruch 1, **dadurch gekennzeichnet, daß** jedes Schlauchteil (1', 2') im Bereich der Seitenwände steifer ist als in dem Schlauchteilabschnitt, der die Dichtfläche darstellt.

14. Schlauchdichtung nach Anspruch 1, **dadurch gekennzeichnet, daß** jedes Schlauchteil (30, 40) eine vorstehende Lippe (31, 41) aufweist, die in im wesentlichen einer Linienberührung dichtend aneinander anliegen und die gegenüber den jeweiligen Seitenwänden nachgiebiger ausgestaltet sind.

15. Schlauchdichtung nach Anspruch 14, **dadurch gekennzeichnet, daß** die Nachgiebigkeit der vorstehenden Lippe (31, 41) durch eine Verdünnung der Wandstärke des Schlauchteils bewirkt ist.

16. Schlauchdichtung nach Anspruch 1, **dadurch gekennzeichnet, daß** jedes Schlauchteil (51, 61) im Haltekörper (7, 17) durch einen druckbeaufschlagten Stützschlauch (52, 62) abgestützt ist.

17. Schlauchdichtung nach Anspruch 16, **dadurch gekennzeichnet, daß** der Stützschlauch (52, 62) einstückig mit dem zugehörigen Schlauchteil (51, 61) ausgebildet ist.

18. Schlauchdichtung nach Anspruch 16 oder 17, **dadurch gekennzeichnet, daß** der Druck im Stützschlauch (52, 62) variierbar ist.

19. Saugspanneinrichtung, insbesondere für Bearbeitungszentren, mit zumindest einer Tragschiene (7), auf der zumindest ein Saugkopf bewegbar ist und in der zumindest eine langgestreckte Kammer (3; 13) vorhanden ist, die mit einer Vakuumquelle verbunden ist und die durch eine lineare Schlauchdichtung (1, 2; 10) nach einem oder mehreren der vorhergehenden Ansprüche nach außen hin abgedichtet ist, wobei zwischen den Schlauchteilen (1, 2; 11, 12) ein ein- und ausführbarer und/oder längsverschiebbarer Entnahmekörper (20) zum Entnehmen des in der Kammer befindlichen Mediums in die Kammer (3) einbringbar ist, der mit einem oder mehreren der Saugköpfe verbunden ist.

20. Saugspanneinrichtung nach Anspruch 19, **dadurch gekennzeichnet, daß** sich die Kammer (3) seitlich der Tragschiene (7) erstreckt und seitlich durch die Schlauchdichtung (1, 2; 10) verschlossen ist.

21. Saugspanneinrichtung nach Anspruch 19, **dadurch gekennzeichnet, daß** der Saugkopf auf der Tragschiene (7) verschieblich angeordnet ist und der Entnahmekörper (20) quer zur Längserstreckungsrichtung der Tragschiene (7) ein- und ausrückbar ist.

## Claims

1. Linear hose seal for sealing a chamber (3) containing a medium via its longitudinal extension in respect of the environment, with two hose parts (1, 2; 11, 12)
- which fit closely to one another so as to seal in substantially linear contact and
- between which an extraction element (20) for extracting the medium can be moved in and out of the chamber (3),
**characterised in that**
they can be inserted in each case with a hose part holding section (6; 16) at least partially into a receiving groove (8; 18) of a holding element (7, 17) by positive locking in such a way that twisting of the hose part in the associated holding element about the longitudinal axis of the hose part is prevented.

2. Hose seal according to claim 1, **characterised in that** each hose part has one or more web elements projecting from the outer circumference, which can be inserted into recesses in the holding element.

3. Hose seal according to claim 1, **characterised in that** each hose part (1, 2; 11, 12) has a web (6), moulded on in one piece, as hose part holding section, the web width of which is matched to the width of the receiving groove.

4. Hose seal according to claim 1, 2 or 3, **characterised in that** each hose part (1, 2; 11, 12) can be impacted internally with compressed air.

5. Hose seal according to one of the preceding claims, **characterised in that** each hose part (1, 2; 11, 12) consists of an elastic material, in particular PUR.

6. Hose seal according to claim 1, **characterised in that** each hose part (1, 2; 11, 12) is detachably inserted into the receiving groove (8; 18) pre-stressed in length.

7. Hose seal according to claim 1, **characterised in that** , each hose part (1, 2; 11, 12) is coated with a friction-reducing material on the area of the section which comes into contact with the extraction element (20).

8. Hose seal according to claim 7, **characterised in that** the friction-reducing material is Teflon.

9. Hose seal according to claim 1, **characterised in that** hose parts (11, 12) and the chamber (13) are constructed as a one-piece hose profile (10).

10. Hose seal according to claim 1, **characterised in that** hose parts (1, 2) have an angular outer contour.

11. Hose seal according to claim 9, **characterised in that** the hose profile (10) has an angular outer contour.

12. Hose seal according to claim 1, **characterised in that** each hose part (1', 2') has a thinner wall thickness in the area of the sealing face than in the area of the hose part holding section.

13. Hose seal according to claim 1, **characterised in that** each hose part (1', 2') is more rigid in the area of the side walls than in the hose part section representing the sealing face.

14. Hose seal according to claim 1, **characterised in that** each hose part (30, 40) has a projecting lip (31, 41), which lips fit closely to one another so as to seal substantially in linear contact and are constructed as more flexible than the respective side walls.

15. Hose seal according to claim 14, **characterised in that** the flexibility of the projecting lip (31, 41) is caused by thinning of the wall thickness of the hose part.

16. Hose seal according to claim 1, **characterised in that** each hose part (51, 61) is supported in the holding element (7, 17) by a pressure-impacted support hose (52, 62).

17. Hose seal according to claim 16, **characterised in that** the support hose (52, 62) is constructed in one piece with the associated hose part (51, 61).

18. Hose seal according to claim 16 or 17, **characterised in that** the pressure in the support hose (52, 62) is variable.

19. Suction clamping device, in particular for processing centres, with at least one carrying rail (7), on which at least one suction head can be moved and in which there is at least one elongated chamber (3; 13) which is connected to a vacuum source and sealed to the outside by a linear hose seal (1, 2; 10) according to one or more of the preceding claims, wherein between the hose parts (1, 2; 11, 12) an extraction element, which can be moved in and out and/or displaced longitudinally, can be brought into the chamber (3) to extract the medium present in the chamber and is connected to one or more of the suction heads.

20. Suction clamping device according to claim 19, **characterised in that** the chamber (3) extends to the side of the carrying rail (7) and is closed at the side by the hose seal (1, 2; 10).

21. Suction clamping device according to claim 19, **characterised in that** the suction head is arranged as displaceable on the carrying rail (7) and the extraction element (20) can be moved in and out crosswise to the direction of the longitudinal extension of the carrying rail (7).

## Revendications

1. Joint d'étanchéité tubulaire linéaire, pour isoler de façon étanche une chambre (3) contenant un fluide, sur sa longueur par rapport à l'environnement, comportant deux parties tubulaires (1, 2 ; 11, 12),
- qui appuient l'une contre l'autre de façon étanche sensiblement en un contact linéaire,
- entre lesquelles un corps de prélèvement (20) peut être introduit et sorti pour prélever du fluide dans la chambre (3), **caractérisé en ce qu'**
- elles sont susceptibles d'être insérées, chaque fois par un tronçon de maintien de partie tubulaire (6; 16), avec une liaison à ajustement de forme, au moins partiellement dans une rainure de logement (8; 18) d'un corps de maintien (7, 17), de manière que toute rotation de la partie tubulaire dans le corps de maintien afférent, autour de l'axe longitudinal de la partie tubulaire, soit empêchée.

2. Joint d'étanchéité tubulaire selon la revendication 1, **caractérisé en ce que** chaque partie tubulaire présente un ou plusieurs éléments formant nervure, faisant saillie depuis la périphérie extérieure, susceptible(s) d'être inséré(s) dans des évidements ménagés dans le corps de maintien.

3. Joint d'étanchéité tubulaire selon la revendication 1, **caractérisé en ce que** chaque partie tubulaire (1, 2 ; 11, 12) présente une nervure (6) formée d'un seul tenant, servant de tronçon de maintien de partie tubulaire, dont la largeur de nervure est adaptée à la largeur de la rainure de logement.

4. Joint d'étanchéité tubulaire selon la revendication 1, 2 ou 3, **caractérisé en ce que** chaque partie tubulaire (1, 2 ; 11, 12) est susceptible d'être sollicitée intérieurement par de l'air comprimé.

5. Joint d'étanchéité tubulaire selon l'une des revendications précédentes, **caractérisé en ce que** chaque partie tubulaire (1, 2 ; 11, 12) est formée d'un matériau élastique, en particulier du PUR.

6. Joint d'étanchéité tubulaire selon la revendication 1, **caractérisé en ce que** chaque partie tubulaire (1, 2 ; 11, 12) est insérée de façon désolidarisable dans la rainure de logement (8; 18), en étant précontrainte en direction longitudinale.

7. Joint d'étanchéité tubulaire selon la revendication 1, **caractérisé en ce que** chaque partie tubulaire (1, 2 ; 11, 12) est revêtue, sur la zone de tronçon en contact ' avec le corps de prélèvement (20), d'un matériau ayant comme effet de réduire le frottement.

8. Joint d'étanchéité tubulaire selon la revendication 7, **caractérisé en ce que** le matériau réduisant le frottement est du téflon.

9. Joint d'étanchéité tubulaire selon la revendication 1, **caractérisé en ce que** les parties tubulaires (11, 12) et la chambre (13) sont réalisées sous la forme de profilés tubulaires (10) monoblocs.

10. Joint d'étanchéité tubulaire selon la revendication 1, **caractérisé en ce que** les parties tubulaires (1, 2) ont un contour extérieur présentant des arêtes.

11. Joint d'étanchéité tubulaire selon la revendication 9, **caractérisé en ce que** le profilé tubulaire (10) présente un contour extérieur présentant des arêtes.

12. Joint d'étanchéité tubulaire selon la revendication 1, **caractérisé en ce que** chaque partie tubulaire (1', 2') présente, dans la zone de la face d'étanchéité, une épaisseur de paroi inférieure à ce qu'elle présente dans la zone du tronçon de maintien de partie tubulaire.

13. Joint d'étanchéité tubulaire selon la revendication 1, **caractérisé en ce que** chaque partie tubulaire (1', 2') est plus rigide dans la zone des parois latérales que dans le tronçon de partie tubulaire formant la face d'étanchéité.

14. Joint d'étanchéité tubulaire selon la revendication 1, **caractérisé en ce que** chaque partie tubulaire (30, 40) présente une lèvre (31, 41) en saillie, les lèvres appuyant de façon étanche l'une sur l'autre sensiblement en un contact linéaire et étant déformables par rapport aux parois latérales respectives.

15. Joint d'étanchéité tubulaire selon la revendication 14, **caractérisé en ce que** la déformabilité de la lèvre (31, 41) en saillie est provoquée par un amincissement de l'épaisseur de paroi de la partie tubulaire.

16. Joint d'étanchéité tubulaire selon la revendication 1, **caractérisé en ce que** chaque partie tubulaire (51, 61) est soutenue dans le corps de maintien (7, 17) par un élément tubulaire d'appui (52, 62) sollicité en pression.

17. Joint d'étanchéité tubulaire selon la revendication 16, **caractérisé en ce que** l'élément tubulaire d'appui (52, 62) est réalisé d'une seule pièce avec la partie tubulaire (51, 61) afférente.

18. Joint d'étanchéité tubulaire selon la revendication 16 ou 17, **caractérisé en ce que** la pression régnant dans la partie tubulaire d'appui (52, 62) est variable.

19. Dispositif de serrage ou bridage par application de vide, en particulier pour des centres d'usinage, avec au moins un rail support (7), sur lequel au moins une tête de ventouse est déplaçable et dans lequel au moins une chambre (3; 13) allongée est prévue, reliée à une source de vide et qui est isolée de façon étanche vers l'extérieur par un joint d'étanchéité tubulaire linéaire (1, 2 ; 10) selon une ou plusieurs des revendications précédentes, entre les parties tubulaire (1, 2; 11, 12) étant susceptible d'être introduit dans la chambre (3), pour effectuer le prélèvement du fluide se trouvant dans cette chambre, un corps de prélèvement (20) susceptible d'être introduit et extrait et/ou d'être déplacé longitudinalement, corps de prélèvement relié à une ou plusieurs des ventouses.

20. Dispositif de serrage ou bridage par application de vide selon la revendication 19, **caractérisé en ce que** la chambre (3) s'étend sur le côté du rail support (7) et est fermée latéralement par le joint d'étanchéité tubulaire linéaire (1, 2 ; 10).

21. Dispositif de serrage ou bridage par application de vide selon la revendication 19, **caractérisé en ce que** la tête de ventouse est disposée de façon déplaçable sur le rail support (7) et le corps de prélèvement (20) est susceptible d'être rétracté et déployé transversalement par rapport à la direction longitudinale du rail support (7).
